(19) Europäisches Patentamt European Patent Office Office européen des brevets

(11) **EP 3 530 935 B1**

(12) **EUROPEAN PATENT SPECIFICATION**

(45) Date of publication and mention of the grant of the patent:
**10.08.2022 Bulletin 2022/32**

(21) Application number: **18811125.6**

(22) Date of filing: **20.03.2018**

(51) International Patent Classification (IPC):
**F03D 17/00** (2016.01)

(52) Cooperative Patent Classification (CPC):
**F03D 17/00;** F05B 2270/334; F05B 2270/8041

(86) International application number:
**PCT/CN2018/079570**

(87) International publication number:
**WO 2019/119659 (27.06.2019 Gazette 2019/26)**

(54) **METHOD AND EQUIPMENT FOR MONITORING VORTEX-INDUCED VIBRATION FOR WIND TURBINE GENERATOR SET**

VERFAHREN UND AUSRÜSTUNG ZUR ÜBERWACHUNG VON WIRBELINDUZIERTER SCHWINGUNG FÜR WINDTURBINENGENERATORSATZ

PROCÉDÉ ET ÉQUIPEMENT DE SURVEILLANCE DE VIBRATION INDUITE PAR VORTEX POUR UN ENSEMBLE DE GÉNÉRATEURS ÉOLIENS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2017 CN 201711364848**

(43) Date of publication of application:
**28.08.2019 Bulletin 2019/35**

(73) Proprietor: **Beijing Goldwind Science & Creation Windpower Equipment Co. Ltd.**
**Daxing, Beijing 100176 (CN)**

(72) Inventor: **YANG, Boyu**
**Beijing 100176 (CN)**

(74) Representative: **Vossius & Partner**
**Patentanwälte Rechtsanwälte mbB**
**Siebertstrasse 3**
**81675 München (DE)**

(56) References cited:
EP-A1- 3 002 455    EP-A1- 3 002 455
CN-A- 105 736 252    CN-A- 106 677 996
CN-A- 106 895 792

- X. W. YE ET AL: "A Review of Machine Vision-Based Structural Health Monitoring: Methodologies and Applications", JOURNAL OF SENSORS, vol. 2016, 1 January 2016 (2016-01-01), pages 1-10, XP055641483, US ISSN: 1687-725X, DOI: 10.1155/2016/7103039
- LI LIANG ET AL: "Vibration distribution measurement using a high-speed multithread active vision", 2017 IEEE INTERNATIONAL CONFERENCE ON ADVANCED INTELLIGENT MECHATRONICS (AIM), IEEE, 3 July 2017 (2017-07-03), pages 400-405, XP033144303, DOI: 10.1109/AIM.2017.8014050 ISBN: 978-1-5090-5998-0 [retrieved on 2017-08-21]
- SIEBERT T ET AL: "High speed image correlation for vibration analysis", JOURNAL OF PHYSICS: CONFERENCE SERIES, INSTITUTE OF PHYSICS PUBLISHING, BRISTOL, GB, vol. 181, no. 1, 1 August 2009 (2009-08-01), page 12064, XP020162843, ISSN: 1742-6596
- DASHAN ZHANG ET AL: "A High-Speed Vision-Based Sensor for Dynamic Vibration Analysis Using Fast Motion Extraction Algorithms", SENSORS, vol. 16, no. 4, 22 April 2016 (2016-04-22), XP055336229, DOI: 10.3390/s16040572

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 530 935 B1

- **G. BUSCA ET AL: "Vibration Monitoring of Multiple Bridge Points by Means of a Unique Vision-Based Measuring System", EXPERIMENTAL MECHANICS., vol. 54, no. 2, 19 September 2013 (2013-09-19), pages 255-271, XP055641374, US ISSN: 0014-4851, DOI: 10.1007/s11340-013-9784-8**

## Description

### FIELD

The present disclosure relates to the technical field of the wind power generation and in particular to a method and an apparatus for monitoring a vortex-induced vibration of a wind turbine.

### BACKGROUND

The wind power generation plays an important role in the growing global clean power market. Various technical issues, including a vortex-induced vibration, may be occurred during the hoisting process of a wind turbine. The vortex-induced vibration will result in a long hoisting time of the wind turbine, thereby causing economic losses, and the vortex-induced vibration may also causes safety accidents.

In the conventional technology, a spoiler device is widely used in developing a suppression device of the vortex-induced vibration. The core functional element of the spoiler device is a spoiler block or a spoiler strip, which is attached to a surface of the tower tube due to its own geometric features and can effectively control the position at which the vortex is separated. In this manner, the original regular flow field can be broke. According to the conventional hoisting process of the tower tube, spoiler strips needs to be winded on a third of the tower tube in the hoisting process. Due to the limitation of the conventional technology, the method for monitoring the vortex-induced vibration is lacked and the effect of the suppression device of vortex-induced vibration can not be monitored as well. For example, the article "A Review of Machine Vision-Based Structural Health Monitoring: Methodologies and Applications" of X. W: Ye et. Al; in Journal of Sensors vol. 2016, published 1 January 2016, pages 1-10 discloses a review of machine vision-based structural health monitoring: methodologies and applications, wherein two cameras are used to capture the targets simultaneously and the geometrical relationship between the two cameras. EP 3 002 455 relates to a method for determining the operating parameters of a wind power plant which comprising taking pictures of the wind power plant, and determining an operating parameter based on the recorded images. The article "Vibration Monitoring of Multiple Bridge Points by Means of a Unique Vision-Based Measuring System" of G. Busca et. al; in Experimental Mechanics vol 54, no, 2, published 19 September 2013, pages 255-271 relates to vibration monitoring of multiple bridge points by means of a unique vision-based measuring system. However, the above prior art cannot monitor vortex-induced vibration and the monitoring efficiency is not efficient.

### SUMMARY

The present disclosure provides a method and an apparatus for monitoring a vortex-induced vibration of a wind turbine, where the monitoring of vortex-induced vibration is realized by obtaining image data for the tower tube of the wind turbine and processing the image data.

According to an aspect of the present disclosure, a method for monitoring a vortex-induced vibration of a wind turbine is provided, the method includes the following steps: obtaining image data of a tower tube of the wind turbine; identifying an image of a mark which is arranged at a predetermined position of the tower tube from the image data; tracking the identified image of the mark to obtain displacement data of the mark; and monitoring the vortex-induced vibration according to the displacement data of the mark.

According to another aspect of the present disclosure, an apparatus for monitoring a vortex-induced vibration of a wind turbine is provided, the monitoring apparatus includes a data obtaining module, a data processing module and a vortex-induced vibration monitoring module, where the data obtaining module is configured to obtain image data of a tower tube of the wind turbine; the data processing module is configured to identify an image of a mark which is arranged at a predetermined position of the tower tube from the image data and track the identified image of the mark to obtain the displacement data of the mark; and the vortex-induced vibration monitoring module is configured to monitor the vortex-induced vibration according to the displacement data of the mark.

According to another aspect of the present disclosure, a system for monitoring a vortex-induced vibration of a wind turbine is provided; the system includes the apparatus for monitoring the vortex-induced vibration of the wind turbine as described above and an obtaining device, where the obtaining device includes an image collector and a protection device.

According to another aspect of the present disclosure, a computer readable storage medium that stores computer programs is provided. The computer programs, when being executed by a processor, cause the processor to perform the method for monitoring the vortex-induced vibration of the wind turbine as described above.

According to another aspect of the present disclosure, a computer including a processor and a non-transitory memory that stores computer programs is provided. The computer programs, when being executed by the processor, cause the processor to perform the method for monitoring the vortex-induced vibration of the wind turbine as described above.

In the present disclosure, the vortex-induced vibration of the wind turbine is monitored by performing image monitoring and performing template matching processing and edge detection on the image data. In the hoisting process of the wind turbine, the vortex-induced vibration is avoided by changing the hoisting time of the wind turbine or adding a suppression device. As a result, economic loss and safety accidents can be effectively avoided, thus improving the hoisting efficiency of the wind turbine.

## BRIEF DESCRIPTION OF THE DRAWINGS

Embodiments of the present disclosure, features and advantages thereof will become clearer in conjunction with the drawings.

Figure 1 illustrates a schematic flow chart of a method for monitoring a vortex-induced vibration of a wind turbine according to an embodiment of the present disclosure.

Figure 2 illustrates a schematic diagram of an installation of image collectors according to an exemplary embodiment of the present disclosure.

Figure 3 illustrates a schematic flow chart of a data processing for the obtained image data according to an embodiment of the present disclosure.

Figure 4 illustrates a schematic flow chart of calculating coordinate data of a mark 1 according to an exemplary embodiment of the present disclosure.

Figure 5 illustrates a block diagram of an apparatus for monitoring a vortex-induced vibration of a wind turbine according to an embodiment of the present disclosure.

Figure 6 illustrates a block diagram of a data processing module according to an embodiment of the present disclosure.

Figure 7 illustrates a block diagram of a system for monitoring a vortex-induced vibration of a wind turbine according to an embodiment of the present disclosure.

Figure 8 illustrates a schematic diagram of a protection device according to an embodiment of the present disclosure.

In the drawings, the same reference number denotes the same element, feature, or structure.

## DETAILED DESCRIPTION OF EMBODIMENTS

In order to make the exemplary embodiments of the present disclosure defined by the claims clear, the description is provided with reference to the drawings. The specific details included in the description are only illustrative and are for a better understand of the present disclosure. Accordingly, it is apparent to those skilled in the art that various changes and modifications may be made to the embodiments described herein without departing from the scope of the disclosure. In addition, descriptions of well-known functions and structures may be omitted for clarity and conciseness.

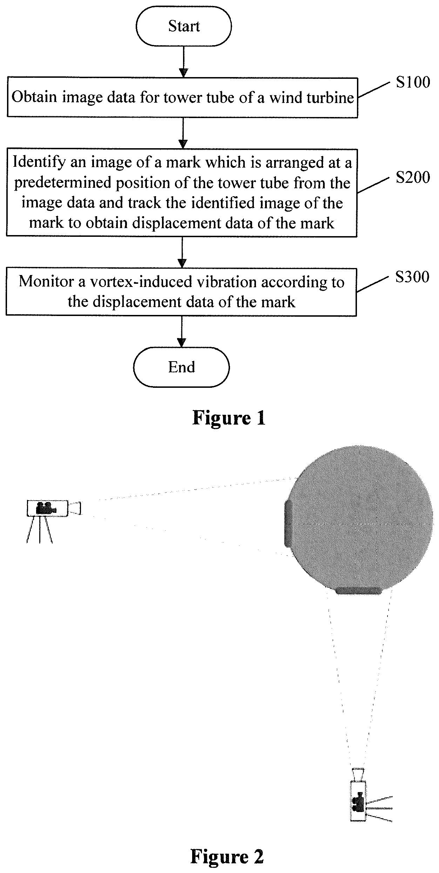

Figure 1 is a schematic flow chart of a method for monitoring a vortex-induced vibration of a wind turbine according to an embodiment of the present disclosure.

As shown in Figure 1, in step S100, image data of a tower tube of a wind turbine is obtained. Specifically, an image collector, such as a camera, is arranged at a certain distance from the wind turbine to take images of the tower tube of the wind turbine. The obtained image data includes two groups of image data which are obtained by taking images for two marks with an angle of 90 degrees. According to an embodiment of the present disclosure, four rectangle red marks may be arranged at four directions of a last section of the tower tube of the wind turbine in advance. Any two adjacent rectangle red marks 1 and 2 with an angle of 90 degrees of the four rectangle red marks may be selected as objects to be captured. Taking the installation of image collectors in Figure 2 as an example, two cameras corresponding to the mark 1 and mark 2 are arranged at positions that are 200 meters away from the wind turbine respectively. The two cameras are arranged with an angle of 90 degrees, each of which is for taking images for a position of the tower tube where the corresponding mark is located. It should be understood that using the camera as an image collector is only an example and is not intended to limit the image collector of the present disclosure. In addition, the shape and color of the mark are only illustrative examples, marks of other shape or color may be used as well.

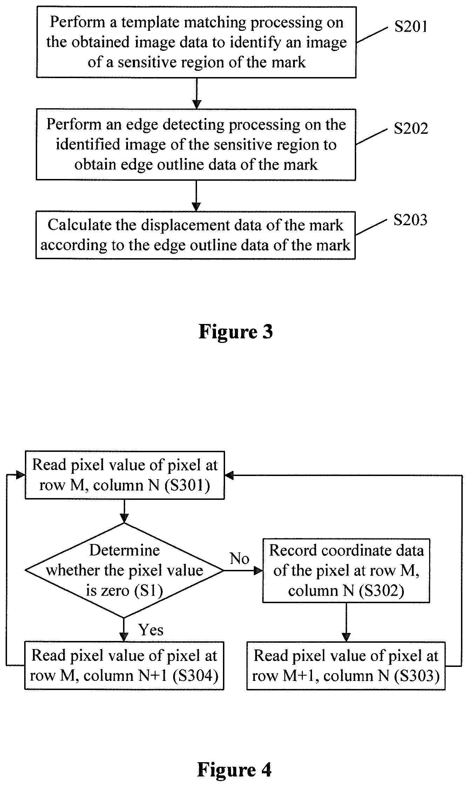

In step S200, an image of a mark which is arranged at a predetermined position of the tower tube is identified from the image data, and the identified image of the mark is tracked to obtain displacement data of the mark. Specifically, a template matching processing is performed on the obtained image data to identify an image of a sensitive region of the mark. An edge detection processing is performed on the identified image of the sensitive region to obtain edge outline data of the mark, and the displacement data is calculated according to the edge outline data of the mark. Hereinafter, the process of identifying an image of a mark which is arranged at the predetermined position of the tower tube from the image data and tracking the identified image of the mark to obtain displacement data of the mark is described in details with reference to Figure 3.

Figure 3 is a schematic flow chart of a data processing for the obtained image data according to an embodiment of the present disclosure.

According to Figure 3, in step S201, a template matching processing is performed on the obtained image data to identify an image of a sensitive region of the mark. Specifically, image data of each frame within a predetermined duration are read. A template of the mark is stacked on the image data of each frame respectively to perform the template matching. A matching degree with the template is determined by a correlation coefficient matching method, and the image of the sensitive region of the mark is identified according to the matching degree with the template. The step of reading image data of each frame within a predetermined duration may be performed in an offline mode and/or an online mode. The template matching processing may be a method in which two or more images of a same scene, which are obtained by different sensors or a same sensor at different time and in different imaging conditions, are aligned with each other in space, or may be a processing method for searching for a corresponding mode in another image according to a known mode. In brief, the template matching is a method for search a target in a large image. The target is known to be in the image, and the target has a same size, direction and image as the template. Therefore, the target can be found in the image by using an algorithm, and coordinates of the target can further be determined. As mentioned above, the obtained image data of each frame of the mark 1 and mark 2 within a predetermined duration is read respectively. Taking the obtained image data of mark 1 as an example, image data of mark 1 is read online, and image data of each frame within time from tl to t2 is selected so as to obtain a series of images $S_h$, where h is a positive integer greater than 0, and denotes the number of frames of images for the mark 1 within tl to t2. For example, 100 pieces of image data may be obtained by reading the image data of mark 1 within the time from tl to t2 in a case that h is 100. The template of the mark is then stacked on each of the images $S_h$ respectively for the template matching. In an embodiment, the template of the mark is a template T of m*n pixels, and the obtained images $S_h$ are images to be searched for the template marching. One image in the images $S_h$ of W*H pixels is selected randomly as the image to be searched. The template T is stacked on $S_h$ and $_{is}$ to be translated on $S_h$, and a regional sub-image of the image to be searched that is covered by the template is $Z_{ij}$, where i, j denotes coordinates of upper left corner of the regional sub-image of the image to be searched. The searching range of the template marching processing is $1 \leq i \leq W - m$ and $1 \leq j \leq H - n$, and the template marching processing is realized by comparing the similarity of T and Zij. Finally, the matching degree with the template is determined by a correlation coefficient matching method. A correlation coefficient (r) denotes a mathematical distance for measuring the similarity of two vectors. The correlation coefficient is originated from the cosine theorem $\cos(A) = b^2 + c^2 - a^2/_{2bc}$. If an angle between the two vectors is zero (r=1), the two vectors are completely similar. If the angle between the two vectors is 90 degree (r=0), the two vectors are completely different. If the angle between the two vectors is 180 degree (r=-1), the two vectors are completely opposite to each other. The cosine theorem in a vector form may be written as follows.

$$\cos(A) = \left. \langle b, c \rangle \middle/ (|b| * |c|) \right.$$

Namely,

$$\cos(A) = \left. (b_1 c_1 + b_2 c_2 + \cdots + b_n c_n) \middle/ \sqrt{(b_1^2 + b_2^2 + \cdots + b_n^2)(c_1^2 + c_2^2 + \cdots + c_n^2)} \right.$$

In this formula, the numerator represents the product of two vectors and the denominator represents the product of norms of two vectors. According to the formula, the correlation coefficient can be written as follows.

$$r = \frac{\sum(x_i - \bar{x})(y_i - \bar{y})}{\sqrt{\sum(x_i - \bar{x})^2}\sqrt{\sum(y_i - \bar{y})^2}}$$

In this formula, $\bar{x}$ represents an average of $x_j$, $\bar{y}$ represents an average of yi. The matching degree between the template T and the regional sub-image $Z_{ij}$ is completely similar in a case that r=l, and the matching degree between template T and regional sub-image $Z_{ij}$ is completely different in a case that r=0. In this manner, a rough region of the mark 1 is determined as a sensitive region. The template matching process is performed on the h pieces of the obtained images to achieve h images of the sensitive region. The algorithm for template matching may include a square difference matching, a correlation matching, a correlation coefficient matching and a normalized matching or the like. It should be understood that the correlation coefficient matching methods described above are only some examples, and are not intended to limit the algorithm for template matching in the present disclosure.

In step S202, an edge detection processing is performed on the identified image of the sensitive region to obtain edge outline data of the mark. Specifically, a filtering processing is performed to the identified image of the sensitive region and a gradient of the image of sensitive region is calculated after the filtering processing. An edge enhancement is then performed on the image of the sensitive region by performing a non-maximal value reduction based on the gradient. Then the edge detection processing is performed on the edge enhanced sensitive region to obtain the edge outline data of the mark through a threshold algorithm. According to the embodiment, the edge detection processing is performed to a randomly selected image of the sensitive region c. Since the algorithm for performing edge detection is mainly based on the first and second derivative of image intensity and such derivatives are sensitive to a noise, a filter is needed to improve the performance of an edge detector related to noise. Conventional filtering methods may include a mean filtering, a median filtering, a Bilateral filtering, a Gaussian filtering and a Wiener filtering, etc. According to an exemplary embodiment of the present disclosure, the Gaussian filtering may be adopted to perform the filter processing on the image of the sensitive region c, that is, a discrete Gaussian function may be adopted to generate a group of normalized Gaussian kernel, then a weighted summation of each point of a gray matrix of the image is performed based on the Gaussian kernel function. The edge detection processing is performed to the filtered sensitive region by calculating the gradient and performing the maximal value reduction, where formulas for calculating an amplitude and a direction of the gradient are as follows.

$$G = \sqrt{G_x^2 + G_y^2}$$

$$\theta = \arctan(\frac{G_y}{G_x})$$

In these formulas, $G_x$ and $G_y$ represent a value of gradient of pixel at different positions respectively. Four possible angles (in general, 0°, 45°, 90°, 135°) may be approximated to based on the gradient direction, the pixel having a maximal value is found by performing the maximal value reduction. That is, whether a pixel value of the pixel is the largest in a field of eight pixels adjacent thereto is determined, and then gray values of the pixels without having the maximal value are assigned as 0. In this manner, pixels without having the maximal pixel values are excluded so as to achieve the edge enhancement. Finally, the edge detection processing is performed to the edge enhanced sensitive region c through the threshold algorithm. Various edge detection method, such as a Canny edge detection, a Sobel edge detection, a Roberts edge detection, a Prewitt edge detection and a Log edge detection may be adopted. The Canny algorithm adopts a delayed threshold, namely, is a method using two thresholds (high threshold and low threshold). In performing the edge detection by adopting the threshold algorithm, a pixel, of which amplitude is greater than the high threshold, is reserved as an edge pixel; a pixel, of which the amplitude of the pixel is less than the low threshold, is excluded; a pixel, of which the amplitude of the pixel is between the high threshold and the low threshold, is reserved only when the pixel is connecting to another pixel having a higher amplitude than the high threshold. The reserved pixels are connected until the entire edge outline is closed. In step S202, the edge detection processing is performed on h pieces of images of the sensitive region respectively and then h pieces of edge outline data of the mark 1 is obtained.

In step S203, the displacement data of the mark is calculated based on the edge outline data of the mark. Specifically, the edge outline data of the mark is substituted into a coordinate system, and pixel values of pixels in the edge outline are then read. Pixel values of pixels in a next row are further read, in a case that the pixel value in the edge outline data is non-zero, so that edge coordinates of the mark are obtained., An average value of the edge coordinates of the marks is calculated and a vertical coordinate of the average value of the edge coordinates is recorded. A differential calculation is performed to the vertical coordinate data of the image data of each frame that is recorded to obtain the displacement data of the edge coordinate of the mark. According to the above example, a piece of the edge outline data is selected from the h pieces of edge outline data obtained in the step S202, the pixel value of each pixel in the edge outline is read, and pixel values of pixels that are in a row adjacent to the edge outline are read in case that the pixel value in the edge outline is not zero. The edge coordinates of the mark 1 is obtained in this manner. The calculation of the coordinate data of the mark 1 that are calculated based on the obtained h pieces of edge outline data is described in details according to the embodiment of the present disclosure with reference to Figure 3.

Figure 4 is a schematic flow chart of calculating coordinate data of the mark 1 according to an exemplary embodiment of the present disclosure.

According to Figure 4, in step S301, a pixel value of a pixel at row M, column N is read. In an embodiment,

6

randomly selected edge outline data f of the mark 1 are substituted into a rectangular coordinate system. The pixel value of each pixel Xmn in f is read, starting from a pixel $X_{11}$ at row 1 and column 1 of the edge outline data f. In step S1, whether the pixel value is zero is determined. In a case that the pixel value is not zero, the process goes to step S302. Otherwise, the process goes to step S304 in a case that the pixel value is zero. In step S302, the coordinate data of the pixel at row M, column N is read. For example, the coordinate data $(x_1, y_1)$ of pixel Xn is recorded in a case that the pixel value of the pixel $X_{11}$ of the edge outline data f is not zero, and the process goes to step S303.

In step S303, a pixel value of a pixel at row M+1 and column N is read. For example, the pixel value of pixel $X_{21}$ at row 2 and column 1 is read for further determination.

In step S304, a pixel value of a pixel at row M and column N+1 is read. For example, a pixel value of a pixel $X_{12}$ is read and determined in a case that the pixel value of pixel $X_{11}$ is zero.

The above mentioned process of reading and determining pixel values of pixels and recording the coordinate data of pixels is repeated, and the coordinate data of pixels are recorded in the case that the pixel value is not zero, so that the edge coordinate data of mark 1 is obtained. The above calculation is performed respectively to the h pieces of the edge outline data obtained in the step S202, so that h groups of the edge coordinate data of the mark 1 is obtained.

Reference is made to Figure 3 again, in step S203, , left edge coordinate data or right edge coordinate data of the mark 1 is extracted based on the obtained edge coordinate data of the mark 1, so as to calculate an average of the coordinates; and a vertical coordinate of the calculated the average of the coordinates is recorded. For example, left edge coordinate data of the extracted mark 1 is $\{(x_1, y_1), (x_1, y_2), (x_1, y_3) ... (x_1, y_n)\}$, and the average value of coordinates is $\left(x_1 、 \overline{v_1}\right)$, where $\overline{v_1} = \frac{y_1 + y_2 + y_3 + ... + y_n}{n}$ . h pieces of vertical coordinate data of the average of the coordinates $\overline{v_1}, \overline{v_2}, \overline{v_3} ... \overline{v_h}$ is calculated based on the obtained h groups of edge coordinate data of the mark 1. A differential calculation is then performed to the h pieces of vertical coordinate data to obtain the displacement data of the left edge coordinate data of the mark 1.

According to an embodiment of the present disclosure, the calculation in steps S201 to S203 is performed on the image data obtained in step S100 respectively, so that the displacement data of the left edge coordinates or the right edge coordinates are obtained. A resultant displacement calculation is performed to the left or right edge coordinates to obtain the displacement data of the mark. According to the above example, the image data of the mark 1 and mark 2 are calculated respectively. For example, the displacement data of the left edge coordinates of the two marks are $\vec{s_1}$ and $\vec{s_2}$ respectively, and the resultant displacement calculation is performed to $\vec{s_1}$ and $\vec{s_2}$ to obtain the displacement data $\vec{s}$ of the mark.

Reference is made to Figure 1 again, in step S300, the vortex-induced vibration is monitored according to displacement data of the mark. Specifically, a wind speed condition of vortex-induced vibration is determined according to the displacement data of the mark and wind speed data in the process of obtaining image data. Whether there is a vortex-induced vibration for the wind turbine having a suppression device is then determined according to the displacement data of the mark and the wind speed data in the process of obtaining image data. The performance of suppression device is evaluated. According to the above example, in a case that the wind turbine are not equipped with a suppression device for the vortex-induced vibration, and the displacement data of the mark is too large or a displacement direction has a rapid change, the vortex-induced vibration is regarded as occurred in the wind turbine. In such case, the wind speed condition of vortex-induced vibration is determined according to the wind speed data in the process of obtaining image data. The hoisting time should be change or a corresponding suppression device for the vortex-induced vibration should be arranged, in a case that the wind speed reaches the wind speed condition of vortex-induced vibration during the hoisting of the wind turbine. In a case that the wind turbine are equipped with the suppression device for vortex-induced vibration but the displacement data of the mark is too large or the displacement direction has a rapid change, the suppression device need to be checked or the suppression device need to be replaced for its poor performance.

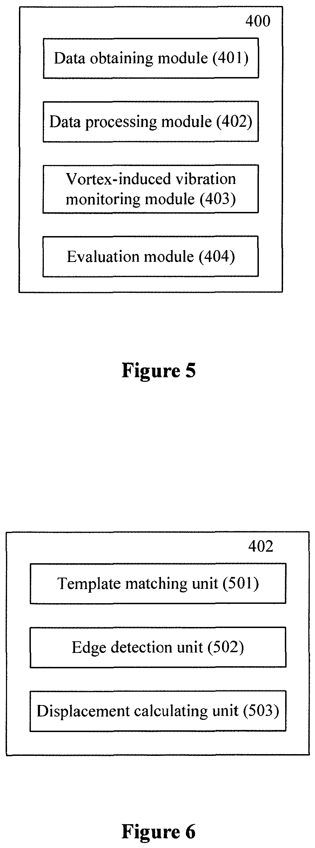

Figure 5 is a block diagram of an apparatus for monitoring a vortex-induced vibration of a wind turbine according to an embodiment of the present disclosure.

As shown in Figure 5, an apparatus 400 for monitoring the vortex-induced vibration of wind turbine includes a data obtaining module 401, a data processing module 402, a vortex-induced vibration monitoring module 403 and an evaluation module 404. According to tan embodiment of this disclosure, the apparatus 400 for monitoring the vortex-induced vibration of the wind turbine may be implemented by various computing devices (for example, computers, servers, workstations, etc.). Specifically, the data obtaining module 401 is obtain image data of a tower tube of the wind turbine; the processing module 402 is configured to identify an image of a mark which is arranged at a predetermined position of the tower tube from the image data and track the identified image of the mark to obtain the displacement data of the mark; and the vortex-induced vibration monitoring module 403 is configured to monitor the vortex-induced vibration according to the displacement data of the mark. The evaluation module 404 is configured to determine a wind speed condition of the vortex-induced vibration according to the displacement data of the mark and wind speed data in the process of obtaining image data. In addition, the evaluation module 404 is further configured to determine whether there is a vortex-induced vibration for the wind turbine having a suppression device according to the displacement data of the mark and the wind speed data in the process of obtaining image data and to evaluate the performance of the suppression device.

Hereinafter, the data processing module 402 according to an embodiment of the present disclosure is described in detail with reference to Figure 6.

Figure 6 is a block diagram of a data processing module according to an embodiment of the present disclosure.

As shown in Figure 6, the data processing module 402 includes a template matching unit 501, an edge detection unit 502 and a displacement calculating unit 503. The template matching unit 501 is configured to perform a template matching processing to the obtained image data to identify an image of a sensitive region of the mark. The edge detection unit 502 is configured to perform an edge detection processing on the image of the sensitive region which is identified by the template matching unit 501 to obtain edge outline data of the mark. The displacement calculating unit 503 is configured to calculate the displacement data of the mark according to the edge outline data of the mark.

The template matching unit 501 is configured to read the obtained image data and obtain image data of each frame within a predetermined duration; stack a template of the mark on each of the images respectively for the template matching, determine a matching degree with the template by a correlation coefficient matching method, and identify the image of the sensitive region of the mark according to the matching degree with the template. According to an embodiment of the present disclosure, there are multiple algorithms for calculation of matching degree with the template, such as a square difference matching, a correlation matching, a correlation coefficient matching and a normalized matching. In the correlation coefficient matching applied in the present disclosure, an overlapping region between the template and the image data of each frame is completely similar in a case that r=1, and an overlapping region between the template and the image data of each frame is completely different in a case that r=0. In this manner, a rough region of the mark is determined as a sensitive region.

The edge detection unit 502 is configured to perform a filtering processing on the identified image of the sensitive region; calculate a gradient of the image of sensitive region after the filtering processing; perform an edge enhancement on the image of the sensitive region by performing a non-maximal value reduction based on the gradient; and perform an edge detection processing on edge enhanced sensitive region to obtain the edge outline data of the mark through a threshold algorithm. According to the embodiment of the present disclosure, conventional filtering methods may include a mean filtering, a median filtering, a Bilateral filtering, a Gaussian filtering and a Wiener filtering, etc. The Gaussian filtering may be adopted to perform the filter processing on the image of the sensitive region. An amplitude and a direction of the gradient of the image of the sensitive region is calculated after the filtering process, and a pixel having a maximal value is found by a maximal value reduction based on the direction of the gradient. That is, whether a pixel value of the pixel is the largest in a field of eight pixels adjacent thereto is determined, and pixels without having a maximal valued is excluded and thus the edge enhancement of the image of the sensitive region is achieved. Whether reserved pixels are connected so that the entire edge outline is closed is determined, the edge outline data of the mark is obtained in such manner.

The displacement calculating unit 503 is configured to substitute the edge outline data of the mark into a coordinate system; read pixel values of pixels in the edge outline data; read pixel values of pixels in a next row in a case that the pixel value in the edge outline data is non-zero, so that edge coordinates of the mark are obtained; calculate an average value of the edge coordinates of the mark and recording a vertical coordinate of the average value of the edge coordinates; and perform a differential calculation on the vertical coordinate data of image data of each frame that is recorded to obtain the displacement data of the edge coordinates of the mark. According to an embodiment of the present disclosure, the obtained image data includes two groups of image data which are obtained by taking images for two marks with an angle of 90 degrees. The edge coordinates of two groups of image data for the marks are the left edge coordinate data or the right edge coordinate data of the mark are extracted to calculate vertical coordinate data of an average value, and a resultant displacement calculation is performed to the left or right edge coordinate data to obtain the displacement data of the mark.

Reference is made to Figure 5 again. The evaluation module 404 is configured to determine a wind speed condition of the vortex-induced vibration according to the displacement data of the mark and wind speed data in the process of obtaining image data; determine whether there is a vortex-induced vibration for the wind turbine having a suppression device according to the displacement data of the mark and the wind speed data in the process of obtaining image data; and evaluate the performance of the suppression device. According to the embodiment of the present disclosure, in a case that the wind turbine are not equipped with a suppression device for the vortex-induced vibration, the wind speed condition of the vortex-induced vibration is determined according to the displacement data of the mark and the wind speed data in the process of obtaining image data. The hoisting time should be change or a corresponding suppression device for the vortex-induced vibration should be arranged at this wind speed condition. In a case that the wind turbine are equipped with the suppression device for vortex-induced vibration, whether there is a vortex-induced vibration for the wind turbine equipped with the suppression device is determined according to the displacement data of the mark and the wind speed data in the process of obtaining image, and the performance of suppression device is evaluated. For example, when the displacement data of the mark is too large or the displacement direction has rapid change, a vortex-induced vibration of the wind turbine is determined, and the performance of the suppression device of the wind turbine is determined to be poor and thus needs to be checked or the suppression device need to be replaced for its poor performance..

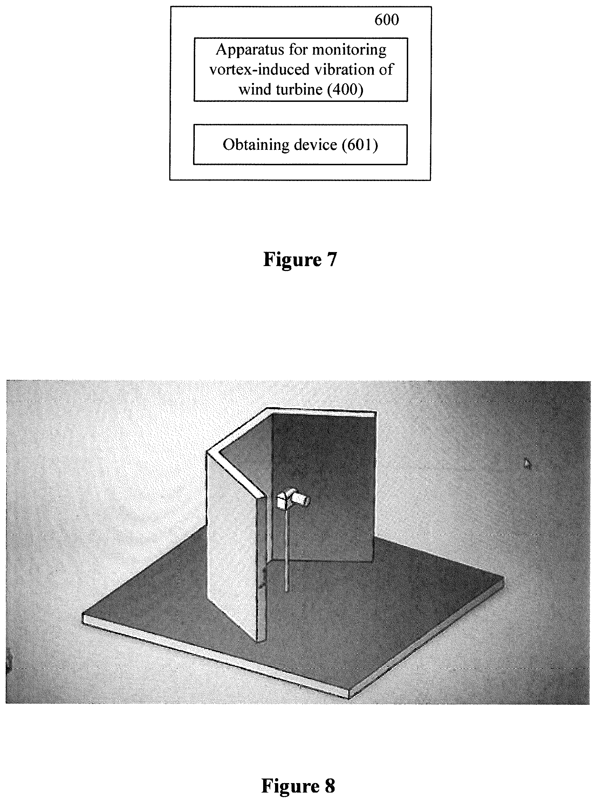

Figure 7 is a block diagram of a system for monitoring a vortex-induced vibration of a wind turbine according to an embodiment of the present disclosure.

As shown in Figure 7, the system 600 for monitoring the vortex-induced vibration of the wind turbine includes the apparatus 400 for monitoring the vortex-induced vibration of the wind turbine and an obtaining device 601, where the obtaining device 601 is configured to obtain image data of the tower tube of the wind turbine, and the apparatus 400 is configured to monitor the vortex-induced vibration of the wind turbine by performing an image monitoring and performing a template matching and an edge detection to the image data. The obtaining device 601 includes an image collector and a protection device for protecting the image collector, where the protection device is of trapezoidal shape and is for protecting the image collector on three sides. An example of the protection device is shown in Figure 8. It should be understood that boards arranged in a trapezoidal shape is only an example, and is not intended to limit the protection device of the present disclosure.

According to the method and apparatus for monitoring the vortex-induced vibration of the wind turbine according to the embodiments of the present disclosure, the vortex-induced vibration of the wind turbine is monitored by performing image monitoring and performing template matching processing and edge detection on the image data. In the hoisting process of the wind turbine, the vortex-induced vibration is avoided by changing the hoisting time of the wind turbine or adding a suppression device. As a result, economic loss and safety accidents can be effectively avoided, thus improving the hoisting efficiency of the wind turbine.

The method for monitoring the vortex-induced vibration of the wind turbine according to the embodiment of the present disclosure may be realized as computer readable codes that are recorded on a computer readable memory medium or may be sent through a transmission medium. The computer readable memory medium may be any kind of data storage devices storing data that can be read by a computer system. A computer program is stored on the computer readable storage medium. When the computer program is executed by a processor, the processor is caused to perform the method for monitoring the vortex-induced vibration of the wind turbine as shown in Figure 1. The computer readable memory medium may include but are not limited to, a Read-Only Memory (ROM), a Random Access Memory (RAM), a CD-ROM, a digital versatile disk (DVD), a magnetic tape, a floppy disk, and an optical data storage device. The transmission medium may include carrier waves transmitted over network or through various types of communication channels. The computer readable memory medium may further be distributed to computer systems connected to the network so that computer readable code is stored and executed in a distributed manner.

In another embodiment of the present disclosure, a computer device is provided, including a processor and a memory configured to storing a computer program. When the computer program is executed by a processor, the processor is caused to perform the method for monitoring the vortex-induced vibration of the wind turbine as shown in Figure 1.

Although the present disclosure is described with reference to exemplary embodiments of the present disclosure, the person skilled in the art will understand that various changes can be made to the embodiments in forms and details without departing from the scope of this disclosure as defined by the claims.

**Claims**

1. A method for monitoring a vortex-induced vibration of a wind turbine, comprising:

   obtaining image data of a tower tube of the wind turbine;
   identifying an image of a mark which is arranged at a predetermined position of the tower tube from the image data;
   tracking the identified image of the mark to obtain displacement data of the mark; and
   monitoring the vortex-induced vibration according to the displacement data of the mark,
   wherein the image data comprises two groups of image data which are acquired by taking images for two marks with an angle of 90 degrees, and the two groups of image data are respectively acquired by two image collectors which are arranged with an angle of 90 degrees.

2. The method according to claim 1, wherein the identifying an images of a mark which is arranged at a predetermined position of the tower tube from the image data and tracking the identified image of the mark to obtain displacement data of the mark comprises:

   performing a template matching processing on the obtained image data to identify an image of a sensitive region of the mark;

performing an edge detection processing on the identified image of the sensitive region to obtain edge outline data of the mark; and

calculating the displacement data of the mark according to the edge outline data of the mark.

3. The method according to claim 2, wherein the performing a template matching processing on the obtained image data to identify an image of a sensitive region of the mark comprises:

reading image data of each frame within a predetermined duration;
stacking a template of the mark on the image data of each frame respectively to perform the template matching;
determining a matching degree with the template by a correlation coefficient matching method; and
identifying the image of the sensitive region of the mark according to the matching degree with the template.

4. The method according to claim 2, wherein the performing an edge detection processing on the identified image of the sensitive region to obtain the edge outline data of the mark comprises:

performing a filtering processing on the identified image of the sensitive region;
calculating a gradient of the image of sensitive region after the filtering processing;
performing an edge enhancement on the image of the sensitive region by performing a non-maximal value reduction based on the gradient; and
performing the edge detection processing on edge enhanced sensitive region to obtain the edge outline data of the mark through a threshold algorithm.

5. The method according to claim 2, wherein the calculating the displacement data according to the edge outline data of the mark comprises:

substituting the edge outline data of the mark into a coordinate system;
reading pixel values of pixels in the edge outline data;
reading pixel values of pixels in a next row in a case that the pixel value in the edge outline data is non-zero, so that edge coordinates of the mark are obtained;
calculating an average value of the edge coordinates of the mark and recording a vertical coordinate of the average value of the edge coordinates; and
performing a differential calculation on the vertical coordinate data of recorded image data of each frame that is recorded to obtain the displacement data of the edge coordinates of the mark.

6. The method according to claim 2, wherein the calculating the displacement data according to the edge outline data of the mark further comprises:
performing a resultant displacement calculation on displacement data of two left edge coordinates or two right edge coordinates to obtain the displacement data of the mark.

7. The method according to claim 1, further comprising:
determining a wind speed condition of the vortex-induced vibration according to the displacement data of the mark and wind speed data in the process of obtaining image data.

8. The method according to claim 1, further comprising:
determining whether there is a vortex-induced vibration for the wind turbine having a suppression device according to the displacement data of the mark and the wind speed data in the process of obtaining image data; and evaluating the performance of the suppression device.

9. An apparatus for monitoring a vortex-induced vibration of a wind turbine, comprising:

a data obtaining module, configured to obtain image data of a tower tube of the wind turbine;
a data processing module, configured to identify an image of a mark which is arranged at a predetermined position of the tower tube from the image data and track the identified image of the mark to obtain the displacement data of the mark; and
a vortex-induced vibration monitoring module, configured to monitor the vortex-induced vibration according to the displacement data of the mark,
wherein the image data comprises two groups of image data which are acquired by taking images for two marks with an angle of 90 degrees, and the two groups of image data are respectively acquired by two image collectors which are arranged with an angle of 90 degrees.

10. The apparatus according to claim 9, wherein the data processing module comprises:

a template matching unit, configured to perform a template matching processing to the obtained image data to identify an image of a sensitive region of the mark;
an edge detection unit, configured to perform an edge detection processing on the identified image of the sensitive region to obtain edge outline data of the mark; and
a displacement calculating unit, configured to calculate the displacement data of the mark according to the edge outline data of the mark.

11. The apparatus according to claim 10, wherein the template matching unit is configured to:

read image data of each frame within a predetermined duration;
stack an template of the mark on the image data of each frame respectively to perform the template matching;
determine a matching degree with the template by a correlation coefficient matching method; and
identify the image of the sensitive region of the mark according to the matching degree with the template.

12. The apparatus according to claim 10, wherein the edge detection unit is configured to:

perform a filtering processing on the identified image of the sensitive region;
calculate a gradient of the image of sensitive region after the filtering processing;
perform an edge enhancement on the image of the sensitive region by performing a non-maximal value reduction based on the gradient; and
perform an edge detection processing on edge enhanced sensitive region to obtain the edge outline data of the mark through a threshold algorithm.

13. The apparatus according to claim 10, wherein the displacement calculating unit is configured to:

substitute the edge outline data of the mark into a coordinate system;
read pixel values of pixels in the edge outline data;
read pixel values of pixels in a next row in a case that the pixel value in the edge outline data is non-zero, so that edge coordinates of the mark are obtained;
calculate an average value of the edge coordinates of the mark and recording a vertical coordinate of the average value of the edge coordinates; and
perform a differential calculation on the vertical coordinate data of image data of each frame that is recorded to obtain the displacement data of the edge coordinates of the mark.

14. The apparatus according to claim 13, wherein the displacement calculating unit is further configured to:
perform a resultant displacement calculation on displacement data of two left edge coordinates or two right edge coordinates to obtain the displacement data of the mark.

15. The apparatus according to claim 9, further comprising:
an evaluation module, configured to:

determine a wind speed condition of the vortex-induced vibration according to the displacement data of the mark and wind speed data in the process of obtaining image data;
determine whether there is a vortex-induced vibration for the wind turbine having a suppression device according to the displacement data of the mark and the wind speed data in the process of obtaining image data; and
evaluate the performance of the suppression device.

**Patentansprüche**

1. Verfahren zur Überwachung einer wirbelinduzierten Schwingung einer Windturbine, umfassend:

Erlangen von Bilddaten eines Rohrturms der Windturbine;
Identifizieren eines Bilds einer Markierung, die an einer vorgegebenen Position des Rohrturms angeordnet ist, aus den Bilddaten;
Nachverfolgen des identifizierten Bilds der Markierung, um Verschiebungsdaten der Markierung zu erlangen; und
Überwachen der wirbelinduzierten Schwingung gemäß den Verschiebungsdaten der Markierung, wobei die Bilddaten zwei Gruppen von Bilddaten umfassen, die dadurch erfasst werden, dass Bilder für zwei Markierungen mit einem Winkel von 90 Grad aufgenommen werden, und die zwei Gruppen von Bilddaten jeweils von zwei Bildkollektoren erfasst werden, die in einem Winkel von 90 Grad angeordnet sind.

**2.** Verfahren nach Anspruch 1, wobei das Identifizieren eines Bilds einer Markierung, die an einer vorgegebenen Position des Rohrturms angeordnet ist, aus den Bilddaten und Nachverfolgen des identifizierten Bilds der Markierung, um Verschiebungsdaten der Markierung zu erlangen, umfasst:

Durchführen einer Template-Matching-Verarbeitung an den erlangten Bilddaten, um ein Bild eines empfindlichen Bereichs der Markierung zu identifizieren;
Durchführen einer Kantendetektionsverarbeitung an dem identifizierten Bild des empfindlichen Bereichs, um Kantenumrissdaten der Markierung zu erlangen; und
Berechnen der Verschiebungsdaten der Markierung gemäß den Kantenumrissdaten der Markierung.

**3.** Verfahren nach Anspruch 2, wobei das Durchführen einer Template-Matching-Verarbeitung an den erlangten Bilddaten, um ein Bild eines empfindlichen Bereichs der Markierung zu erlangen, umfasst:

Auslesen von Bilddaten eines jeden Einzelbilds innerhalb einer vorgegebenen Dauer;
Stacken eines Templates der Markierung jeweils auf die Bilddaten jedes Einzelbilds, um das Template-Matching durchzuführen;
Ermitteln eines Übereinstimmungsgrads mit dem Template mittels eines Korrelationskoeffizienten-Matching-Verfahrens; und
Identifizieren des Bilds des empfindlichen Bereichs der Markierung gemäß dem Übereinstimmungsgrad mit dem Template.

**4.** Verfahren nach Anspruch 2, wobei das Durchführen einer
Kantendetektionsverarbeitung an dem identifizierten Bild des empfindlichen Bereichs, um die Kantenumrissdaten der Markierung zu erlangen, umfasst:

Durchführen einer Filterungsverarbeitung an dem identifizierten Bild des empfindlichen Bereichs;
Berechnen eines Gradienten des Bilds des empfindlichen Bereichs nach der Filterungsverarbeitung;
Durchführen einer Kantenverbesserung des Bilds des empfindlichen Bereichs mittels Durchführen einer nicht-maximalen Wertverringerung auf Grundlage des Gradienten; und
Durchführen der Kantendetektionsverarbeitung an dem kantenverbesserten empfindlichen Bereich, um die Kantenumrissdaten der Markierung durch einen Schwellenwertalgorithmus zu erlangen.

**5.** Verfahren nach Anspruch 2, wobei das Berechnen der Verschiebungsdaten gemäß den Kantenumrissdaten der Markierung umfasst:

Einsetzen der Kantenumrissdaten der Markierung in ein Koordinatensystem;
Auslesen von Pixelwerten von Pixeln in den Kantenumrissdaten;
Auslesen von Pixelwerten von Pixeln in einer nächsten Zeile für den Fall, dass der Pixelwert in den Kantenumrissdaten nicht null ist, sodass Kantenkoordinaten der Markierung erlangt werden;
Berechnen eines Durchschnittswerts der Kantenkoordinaten der Markierung und Aufzeichnen einer vertikalen Koordinate des Durchschnittswerts der Kantenkoordinaten; und
Durchführen einer Differentialrechnung an den vertikalen Koordinatendaten der aufgezeichneten Bilddaten jedes Einzelbilds, die aufgezeichnet werden, um die Verschiebungsdaten der Kantenkoordinaten der Markierung zu erlangen.

**6.** Verfahren nach Anspruch 2, wobei das Berechnen der Verschiebungsdaten gemäß den Kantenumrissdaten der Markierung ferner umfasst:
Durchführen einer Resultantenverschiebungsberechnung an den Verschiebungsdaten von zwei linken Kantenkoordinaten oder zwei rechten Kantenkoordinaten, um die Verschiebungsdaten der Markierung zu erlangen.

**7.** Verfahren nach Anspruch 1, ferner umfassend:
Ermitteln einer Windgeschwindigkeitsbedingung der wirbelinduzierten Schwingung gemäß den Verschiebungsdaten der Markierung und Windgeschwindigkeitsdaten bei dem Prozess des Erlangens von Bilddaten.

**8.** Verfahren nach Anspruch 1, ferner umfassend:
Ermitteln, ob bei der Windturbine mit einer Unterdrückungsvorrichtung eine wirbelinduzierte Schwingung vorliegt, gemäß den Verschiebungsdaten der Markierung und den Windgeschwindigkeitsdaten bei dem Prozess des Erlangens von Bilddaten; und Bewerten der Leistung der Unterdrückungsvorrichtung.

**9.** Vorrichtung zur Überwachung einer wirbelinduzierten Schwingung einer Windturbine, aufweisend:

ein Datenerlangungsmodul, das konfiguriert ist, Bilddaten eines Rohrturms der Windturbine zu erlangen;
ein Datenverarbeitungsmodul, das konfiguriert ist, ein Bild einer Markierung, die an einer vorgegebenen Position des Rohrturms angeordnet ist, aus den Bilddaten zu identifizieren und das identifizierte Bild der Markierung nachzuverfolgen, um die Verschiebungsdaten der Markierung zu erlangen; und
ein Modul zur Überwachung von wirbelinduzierter Schwingung, das konfiguriert ist, die wirbelinduzierte Schwingung gemäß den Verschiebungsdaten der Markierung zu überwachen;
wobei die Bilddaten zwei Gruppen von Bilddaten umfassen, die dadurch erfasst werden, dass Bilder für zwei Markierungen mit einem Winkel von 90 Grad aufgenommen werden, und die zwei Gruppen von Bilddaten jeweils von zwei Bildkollektoren erfasst werden, die in einem Winkel von 90 Grad angeordnet sind.

**10.** Vorrichtung nach Anspruch 9, wobei das Datenverarbeitungsmodul aufweist:

eine Template-Matching-Einheit, die konfiguriert ist, eine Template-Matching-Verarbeitung an den erlangten Bilddaten durchzuführen, um ein Bild eines empfindlichen Bereichs der Markierung zu identifizieren;
eine Kantendetektionseinheit, die konfiguriert ist, eine Kantendetektionsverarbeitung an dem identifizierten Bild des empfindlichen Bereichs durchzuführen, um Kantenumrissdaten der Markierung zu erlangen; und
eine Verschiebungsberechnungseinheit, die konfiguriert ist, die Verschiebungsdaten der Markierung gemäß den Kantenumrissdaten der Markierung zu berechnen.

**11.** Vorrichtung nach Anspruch 10, wobei die Template-Matching-Einheit konfiguriert ist, um:

Bilddaten eines jeden Einzelbilds innerhalb einer vorgegebenen Dauer auszulesen;
ein Template der Markierung jeweils auf die Bilddaten jedes Einzelbilds zu stacken, um das Template-Matching durchzuführen;
einen Übereinstimmungsgrad mit dem Template mittels eines Korrelationskoeffizienten-Matching-Verfahrens zu ermitteln; und
das Bild des empfindlichen Bereichs der Markierung gemäß dem Übereinstimmungsgrad mit dem Template zu identifizieren.

**12.** Vorrichtung nach Anspruch 10, wobei die Kantendetektionseinheit konfiguriert ist, um:

eine Filterungsverarbeitung an dem identifizierten Bild des empfindlichen Bereichs durchzuführen;
einen Gradienten des Bilds des empfindlichen Bereichs nach der Filterungsverarbeitung zu berechnen;
ein Kantenverbessern des Bilds des empfindlichen Bereichs mittels Durchführen einer nicht-maximalen Wertverringerung auf Grundlage des Gradienten durchzuführen; und
eine Kantendetektionsverarbeitung an dem kantenverbesserten empfindlichen Bereich durchzuführen, um die Kantenumrissdaten der Markierung durch einen Schwellenwertalgorithmus zu erlangen.

**13.** Vorrichtung nach Anspruch 10, wobei die Verschiebungsberechnungseinheit konfiguriert ist, um:

die Kantenumrissdaten der Markierung in ein Koordinatensystem einzusetzen;
Pixelwerte von Pixeln in den Kantenumrissdaten auszulesen;
Pixelwerte von Pixeln in einer nächsten Zeile für den Fall, dass der Pixelwert in den Kantenumrissdaten nicht null ist, auszulesen, sodass Kantenkoordinaten der Markierung erlangt werden;
einen Durchschnittswert der Kantenkoordinaten der Markierung zu berechnen und eine vertikale Koordinate des Durchschnittswerts der Kantenkoordinaten aufzuzeichnen; und
eine Differentialrechnung an den vertikalen Koordinatendaten der Bilddaten jedes Einzelbilds durchzuführen, die aufgezeichnet werden, um die Verschiebungsdaten der Kantenkoordinaten der Markierung zu erlangen.

**14.** Vorrichtung nach Anspruch 13, wobei die Verschiebungsberechnungseinheit ferner konfiguriert ist, um:
eine Resultantenverschiebungsberechnung an den Verschiebungsdaten von zwei linken Kantenkoordinaten oder zwei rechten Kantenkoordinaten durchzuführen, um die Verschiebungsdaten der Markierung zu erlangen.

**15.** Vorrichtung nach Anspruch 9, ferner aufweisend:
ein Bewertungsmodul, das konfiguriert ist, um:

eine Windgeschwindigkeitsbedingung der wirbelinduzierten Schwingung gemäß den Verschiebungsdaten der Markierung und Windgeschwindigkeitsdaten bei dem Prozess des Erlangens von Bilddaten zu ermitteln;
zu ermitteln, ob bei der Windturbine mit einer Unterdrückungsvorrichtung eine wirbelinduzierte Schwingung vorliegt, gemäß den Verschiebungsdaten der Markierung und den Windgeschwindigkeitsdaten bei dem Prozess des Erlangens von Bilddaten; und
die Leistung der Unterdrückungsvorrichtung zu bewerten.

**Revendications**

**1.** Procédé destiné à surveiller les vibrations induites par vortex d'une éolienne, comprenant les étapes suivantes :

obtenir des données d'image du mât de l'éolienne ;
identifier une image d'un repère qui est agencé au niveau d'une position prédéterminée du mât à partir des données d'image ;
suivre l'image identifiée du repère afin d'obtenir des données de déplacement du repère ; et
surveiller les vibrations induites par vortex selon les données de déplacement du repère,
dans lequel les données d'image comprennent deux groupes de données d'image qui sont acquises en prenant des images de deux repères faisant un angle de 90 degrés, et les deux groupes de données d'image sont respectivement acquises par deux collecteurs d'image qui sont agencés selon un angle de 90 degrés.

**2.** Procédé selon la revendication 1, dans lequel les étapes consistant à identifier une image d'un repère qui est agencé au niveau d'une position prédéterminée du mât à partir des données d'image, et à suivre l'image identifiée du repère afin d'obtenir des données de déplacement du repère, comprennent les étapes suivantes :

exécuter un traitement de mise en correspondance de gabarit sur les données d'image obtenues, afin d'identifier une image d'une région sensible du repère ;
exécuter un traitement de détection de bord sur l'image identifiée de la région sensible, afin d'obtenir des données de contour de bord du repère ; et
calculer les données de déplacement du repère selon les données de contour de bord du repère.

**3.** Procédé selon la revendication 2, dans lequel l'étape consistant à exécuter un traitement de mise en correspondance de gabarit sur les données d'image obtenues, afin d'identifier une image d'une région sensible du repère, comprend les étapes suivantes :

lire les données d'image de chaque image pendant une durée prédéterminée ;
superposer un gabarit du repère sur les données d'image de chaque image respectivement, afin d'exécuter la mise en correspondance du repère ;
déterminer un degré de mise en correspondance avec le gabarit à l'aide d'un procédé de mise en correspondance de coefficient de corrélation ; et
identifier l'image de la région sensible du repère selon le degré de mise en correspondance avec le gabarit.

**4.** Procédé selon la revendication 2, dans lequel l'étape consistant à exécuter un traitement de détection de bord sur l'image identifiée de la région sensible, afin d'obtenir les données de contour de bord du repère, comprend les étapes suivantes :

exécuter un traitement de filtrage sur l'image identifiée de la région sensible ;
calculer un gradient de l'image de la région sensible après le traitement de filtrage ;
exécuter une amélioration de bord sur l'image de la région sensible, en exécutant une réduction de valeur non maximale basée sur le gradient ; et

exécuter le traitement de détection de bord sur la région sensible dont le bord a été amélioré, afin d'obtenir des données de contour de bord du repère, par un algorithme de seuil.

5. Procédé selon la revendication 2, dans lequel l'étape consistant à calculer les données de déplacement selon les données de contour de bord du repère, comprend les étapes suivantes :

remplacer les données de contour de bord du repère dans un système de coordonnées ;
lire les valeurs de pixel des pixels dans les données de contour de bord ;
lire les valeurs de pixel des pixels dans une ligne suivante dans un cas où la valeur de pixel dans les données de contour de bord, est différente de zéro, de façon à obtenir les coordonnées de bord du repère ;
calculer une valeur moyenne des coordonnées de bord du repère, et enregistrer une coordonnée verticale de la valeur moyenne des coordonnées de bord ; et
exécuter un calcul différentiel sur les données de coordonnées verticales des données d'image enregistrées de chaque image qui est enregistrée, afin d'obtenir les données de déplacement des coordonnées de bord du repère.

6. Procédé selon la revendication 2, dans lequel l'étape consistant à calculer les données de déplacement selon les données de contour de bord du repère, comprend en outre les étapes suivantes :
exécuter un calcul de déplacement résultant sur les données de déplacement de deux coordonnées du bord gauche, ou de deux coordonnées du bord droit, afin d'obtenir les données de déplacement du repère.

7. Procédé selon la revendication 1, comprenant en outre l'étape suivante :
déterminer une condition de vitesse du vent des vibrations induites par vortex selon les données de déplacement du repère, et les données de vitesse du vent, dans le processus consistant à obtenir les données d'image.

8. Procédé selon la revendication 1, comprenant en outre les étapes suivantes :

déterminer la présence de vibrations induites par vortex de l'éolienne qui présente un dispositif de suppression selon les données de déplacement du repère, et les données de vitesse du vent, dans le processus consistant à obtenir les données d'image ; et
évaluer les performances du dispositif de suppression.

9. Appareil destiné à surveiller les vibrations induites par vortex d'une éolienne, comprenant les étapes suivantes :

un module obtention de données, configuré pour obtenir des données d'image du mât de l'éolienne ;
un module de traitement de données, configuré pour identifier une image d'un repère qui est agencé au niveau d'une position prédéterminée du mât, à partir des données d'image et, suivre l'image identifiée du repère afin obtenir les données de déplacement du repère ; et
un module de surveillance des vibrations induites par vortex, configuré pour surveiller les vibrations induites par vortex selon les données de déplacement du repère,
dans lequel les données d'image comprennent deux groupes de données d'image qui sont acquises en prenant des images de deux repères faisant un angle de 90 degrés, et les deux groupes de données d'image sont respectivement acquises par deux collecteurs d'image qui sont agencés selon un angle de 90 degrés.

10. Appareil selon la revendication 9, dans lequel le module de traitement de données, comprend :

une unité de mise en correspondance de gabarit, configuré pour exécuter un traitement de mise en correspondance de gabarit sur les données d'image obtenues, afin d'identifier une image d'une région sensible du repère ;
une unité de détection de bord, configuré pour exécuter un traitement de détection de bord sur l'image identifiée de la région sensible, afin d'obtenir des données de contour de bord du repère ; et
une unité de calcul de déplacement, configurée pour calculer les données de déplacement du repère selon les données de contour de bord du repère.

11. Appareil selon la revendication 10, dans lequel l'unité de mise en correspondance de gabarit, est configurée pour :

lire les données d'image de chaque image pendant une durée prédéterminée ;
superposer un gabarit du repère sur les données d'image de chaque image respectivement, afin d'exécuter la mise en correspondance du repère ;

déterminer un degré de mise en correspondance avec le gabarit à l'aide d'un procédé de mise en correspondance de coefficient de corrélation ; et

identifier l'image de la région sensible du repère selon le degré de mise en correspondance avec le gabarit.

**12.** Appareil selon la revendication 10, dans lequel l'unité de détection de bord, est configurée pour :

exécuter un traitement de filtrage sur l'image identifiée de la région sensible ;

calculer un gradient de l'image de la région sensible après le traitement de filtrage ;

exécuter une amélioration de bord sur l'image de la région sensible, en exécutant une réduction de valeur non maximale basée sur le gradient ; et

exécuter un traitement de détection de bord sur la région sensible dont le bord a été amélioré, afin d'obtenir des données de contour de bord du repère, par un algorithme de seuil.

**13.** Appareil selon la revendication 10, dans lequel l'unité de calcul de déplacement, est configurée pour :

remplacer les données de contour de bord du repère dans un système de coordonnées ;

lire les valeurs de pixels des pixels dans les données de contour de bord ;

lire les valeurs de pixel des pixels dans une ligne suivante dans un cas où la valeur de pixel dans les données de contour de bord, est différente de zéro, de façon à obtenir les coordonnées de bord du repère ;

calculer une valeur moyenne des coordonnées de bord du repère, et enregistrer une coordonnée verticale de la valeur moyenne des coordonnées de bord ; et

exécuter un calcul différentiel sur les données de coordonnées verticales des données d'image de chaque image qui est enregistrée, afin d'obtenir les données de déplacement des coordonnées de bord du repère.

**14.** Appareil selon la revendication 13, dans lequel l'unité de calcul de déplacement, est configurée en outre pour :
exécuter un calcul de déplacement résultant sur les données de déplacement de deux coordonnées du bord gauche, ou de deux coordonnées du bord droit, afin d'obtenir les données de déplacement du repère.

**15.** Appareil selon la revendication 9, comprenant en outre :
un module d'évaluation, configuré pour :

déterminer une condition de vitesse du vent des vibrations induites par vortex selon les données de déplacement du repère, et les données de vitesse du vent, dans le processus consistant à obtenir les données d'image.

déterminer la présence de vibrations induites par vortex de l'éolienne qui présente un dispositif de suppression selon les données de déplacement du repère, et les données de vitesse du vent, dans le processus consistant à obtenir les données d'image ; et

évaluer les performances du dispositif de suppression.

**Figure 1**

**Figure 2**

Perform a template matching processing on
the obtained image data to identify an image
of a sensitive region of the mark — S201

Perform an edge detecting processing on the
identified image of the sensitive region to
obtain edge outline data of the mark — S202

Calculate the displacement data of the mark
according to the edge outline data of the mark — S203

**Figure 3**

Read pixel value of pixel at
row M, column N (S301)

Determine
whether the pixel value
is zero (S1)

No → Record coordinate data
of the pixel at row M,
column N (S302)

Yes

Read pixel value of pixel at
row M, column N+1 (S304)

Read pixel value of pixel at
row M+1, column N (S303)

**Figure 4**

```
┌─────────────────────────────────────────┐
│                                   400    │
│   ┌─────────────────────────────────┐    │
│   │  Data obtaining module (401)    │    │
│   └─────────────────────────────────┘    │
│                                          │
│   ┌─────────────────────────────────┐    │
│   │  Data processing module (402)   │    │
│   └─────────────────────────────────┘    │
│                                          │
│   ┌─────────────────────────────────┐    │
│   │  Vortex-induced vibration       │    │
│   │  monitoring module (403)        │    │
│   └─────────────────────────────────┘    │
│                                          │
│   ┌─────────────────────────────────┐    │
│   │  Evaluation module (404)        │    │
│   └─────────────────────────────────┘    │
│                                          │
└─────────────────────────────────────────┘
```

**Figure 5**

```
┌─────────────────────────────────────────┐
│                                   402    │
│   ┌─────────────────────────────────┐    │
│   │  Template matching unit (501)   │    │
│   └─────────────────────────────────┘    │
│                                          │
│   ┌─────────────────────────────────┐    │
│   │  Edge detection unit (502)      │    │
│   └─────────────────────────────────┘    │
│                                          │
│   ┌─────────────────────────────────┐    │
│   │ Displacement calculating unit (503) │ │
│   └─────────────────────────────────┘    │
│                                          │
└─────────────────────────────────────────┘
```

**Figure 6**

600

| Apparatus for monitoring vortex-induced vibration of wind turbine (400) |
| :---: |

| Obtaining device (601) |
| :---: |

**Figure 7**

**Figure 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3002455 A

**Non-patent literature cited in the description**

- **X. W: YE.** A Review of Machine Vision-Based Structural Health Monitoring: Methodologies and Applications. *Journal of Sensors,* 01 January 2016, vol. 2016, 1-10

- **G. BUSCA.** Vibration Monitoring of Multiple Bridge Points by Means of a Unique Vision-Based Measuring System. *Experimental Mechanics,* 19 September 2013, vol. 54 (2), 255-271